(19) Europäisches Patentamt
European Patent Office
Office européen des brevets

(11) EP 4 700 088 A1

(12) EUROPEAN PATENT APPLICATION
published in accordance with Art. 153(4) EPC

(43) Date of publication:
**25.02.2026 Bulletin 2026/09**

(21) Application number: **25762342.1**

(22) Date of filing: **21.02.2025**

(51) International Patent Classification (IPC):
***C08L 67/04*** (2006.01) ***C08L 33/14*** (2006.01)
***C08G 63/06*** (2006.01) ***C08G 63/78*** (2006.01)
***C08G 63/91*** (2006.01) ***C08F 120/28*** (2006.01)
***C08G 63/88*** (2006.01)

(52) Cooperative Patent Classification (CPC):
**C08F 120/28; C08G 63/06; C08G 63/78;
C08G 63/88; C08G 63/91; C08L 33/14; C08L 67/04**

(86) International application number:
**PCT/KR2025/002498**

(87) International publication number:
**WO 2025/183408 (04.09.2025 Gazette 2025/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.02.2024 KR 20240028203**
**27.02.2024 KR 20240028204**
**27.02.2024 KR 20240028205**

(71) Applicant: **LG Chem, Ltd.**
**Seoul 07336 (KR)**

(72) Inventors:
- **LEE, Jungyong**
  **Daejeon 34122 (KR)**
- **LEE, Hee Cheon**
  **Daejeon 34122 (KR)**
- **JEONG, Dae Youn**
  **Daejeon 34122 (KR)**
- **NAM, Gibok**
  **Daejeon 34122 (KR)**
- **JEONG, Woongchan**
  **Daejeon 34122 (KR)**
- **CHOE, Dongcheol**
  **Daejeon 34122 (KR)**
- **KIM, Chul Woong**
  **Daejeon 34122 (KR)**
- **CHOE, Jae Hoon**
  **Daejeon 34122 (KR)**
- **PARK, Byung Hyun**
  **Daejeon 34122 (KR)**
- **LEE, Yeonju**
  **Daejeon 34122 (KR)**
- **JEONG, Cheolhwan**
  **Daejeon 34122 (KR)**
- **CHOE, Yeonji**
  **Daejeon 34122 (KR)**
- **CHOI, Jong Young**
  **Daejeon 34122 (KR)**

(74) Representative: **Plasseraud IP**
**104 Rue de Richelieu**
**CS92104**
**75080 Paris Cedex 02 (FR)**

# (54) POLY(3-HYDROXYPROPIONATE) COMPOSITION AND METHOD FOR PREPARING SAME

(57) In the present invention, a poly(3-hydroxypropionate) composition comprising a linear structure poly(3-hydroxypropionate) and a branched structure poly(3-hydroxypropionate), and having a predetermined slope of the Mark-Houwink-Sakurada equation ($\alpha$), and a method for preparing the same are provided.



Processed by Luminess, 75001 PARIS (FR)

**(Cont. next page)**

【FIG. 1】

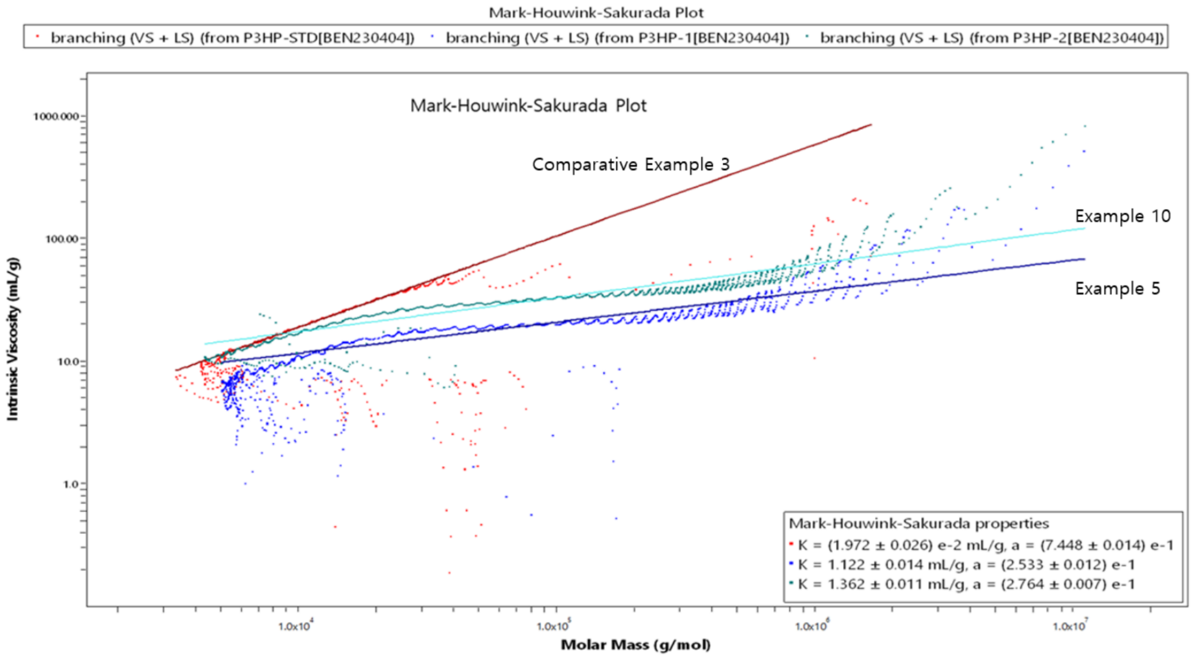
Mark-Houwink-Sakurada Plot
branching (VS + LS) (from P3HP-STD[BEN230404])
branching (VS + LS) (from P3HP-1[BEN230404])
branching (VS + LS) (from P3HP-2[BEN230404])
Mark-Houwink-Sakurada Plot
Comparative Example 3
Example 10
Example 5
Intrinsic Viscosity (mL/g)
1000.000
100.00
10.0
1.0
Mark-Houwink-Sakurada properties
K = (1.972 ± 0.026) e-2 mL/g, a = (7.448 ± 0.014) e-1
K = 1.122 ± 0.014 mL/g, a = (2.533 ± 0.012) e-1
K = 1.362 ± 0.011 mL/g, a = (2.764 ± 0.007) e-1
1.0x10^4
1.0x10^5
1.0x10^6
1.0x10^7
Molar Mass (g/mol)

## Description

### FIELD OF THE INVENTION

The present invention relates to a poly(3-hydroxypropionate) composition and a method for preparing the same.

### BACKGROUND OF THE INVENTION

poly(3-hydroxypropionic acid) has biodegradability characteristics, and due to these environmentally friendly characteristics, research using it has been actively conducted recently. The methods for preparing poly(3-hydroxypropionic acid) may be broadly classified into two categories. One is a petrochemical-based method involving polymerization using β-propiolactone (PL), and the other is a bio-based method using 3-hydroxypropionic acid (3HP).

The case of using β-propiolactone requires multiple synthesis steps using ethylene oxide, thus having disadvantages in terms of economic feasibility compared to the case of using 3-hydroxypropionic acid, and has the problem of 0% bio-content.

Meanwhile, in the case of polymerization using the synthesis of 3-hydroxypropionic acid, multiple steps such as freeze-drying, ultra-sonication, and elution using a solvent are required to obtain poly(3-hydroxypropionic acid), and a large amount of solvent must be used at this time.

To solve this, there have been attempts to use condensation polymerization of 3-hydroxypropionic acid, but by-products in the form of cyclic oligomers are generated, and as the viscosity increases during condensation polymerization, water generated as a byproduct is not removed, which limits the ability to obtain high molecular weight poly(3-hydroxypropionic acid).

Accordingly, there have been attempts to improve the molecular weight by Ring-Opening Polymerization (ROP) of low molecular weight cyclic oligomers, but there are difficulties in separation and purification. In addition, there were attempts to increase the reaction temperature and time to improve the molecular weight, but only the weight-average molecular weight increased, while the number-average molecular weight did not, and there was also a problem of an increased generation rate of by-products where polymer terminal vinyl groups are formed. Accordingly, a method for preparing poly(3-hydroxypropionic acid) with a high number-average molecular weight from 3-hydroxypropionic acid is required.

### SUMMARY OF THE INVENTION

### TECHNICAL PROBLEM

The present invention relates to a composition including poly(3-hydroxypropionate) that has biodegradability, has both high number-average molecular weight and weight-average molecular weight, and has a very narrow PDI value, and a method for preparing the same.

### TECHNICAL SOLUTION

According to an embodiment of the present invention, there is provided a method for preparing poly(3-hydroxypropionate) composition, including a step of preparing a high-temperature reacted 3-hydroxypropionic acid oligomer or polymer by reacting a 3-hydroxypropionic acid monomer or polymer at a temperature of 160 °C or higher; and a step of preparing a poly(3-hydroxypropionate) composition by polymerizing the high-temperature reacted 3-hydroxypropionic acid oligomer or polymer.

According to another embodiment of the present invention, there is provided a poly(3-hydroxypropionate) composition including a mixture including a linear structure poly(3-hydroxypropionate) and a branched structure poly(3-hydroxypropionate), wherein a slope of the Mark-Houwink-Sakurada equation ($\alpha$) for the mixture is 0.10 or more and 0.45 or less.

Hereinafter, the poly(3-hydroxypropionate) composition and the method for preparing the same according to specific embodiments of the invention will be described in more detail.

In addition, the steps constituting the preparation method described in this specification, unless explicitly stated to be sequential or continuous or there is another special order, are not to be interpreted as being limited to the order in which one step constituting one preparation method and another step are described in the specification. Therefore, the order of the constituent steps of the preparation method may be changed within a range that may be easily understood by a person skilled in the art, and in this case, the accompanying changes obvious to a person skilled in the art are included in the scope of the present invention.

In addition, in this specification, the terms 'first' and 'second' are used to describe various constituent elements,

and these terms are used only for the purpose of distinguishing one constituent element from another.

In addition, in this specification, unless otherwise mentioned, the weight-average molecular weight of a polymer may be measured using Gel Permeation Chromatography (GPC). Specifically, the (co)polymer is dissolved in chloroform to a concentration of 2 mg/ml, then 20 μl is injected into the GPC, and GPC analysis is performed at 40 °C. At this time, chloroform is used as the mobile phase of the GPC, introduced at a flow rate of 1.0 mL/min, two Agilent Mixed-B columns are used connected in series, and an RI Detector is used as the detector. The Mw value is derived using a calibration curve formed using polystyrene standard specimens. The weight-average molecular weights of the nine types of polystyrene standard specimens used were 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

In the present invention, 3-hydroxypropionic acid has a meaning including 3-hydroxypropionic acid and/or 3-hydroxypropionate.

According to an embodiment of the invention, there is provided a method for preparing poly(3-hydroxypropionate) composition, including a step of preparing a high-temperature reacted 3-hydroxypropionic acid oligomer or polymer by reacting a 3-hydroxypropionic acid monomer or polymer at a temperature of 160 °C or higher; and a step of preparing a poly(3-hydroxypropionate) composition by polymerizing the high-temperature reacted 3-hydroxypropionic acid oligomer or polymer.

The present inventors have completed the invention by confirming that a composition including poly(3-hydroxypropionate) with a large molecular weight such as a number-average molecular weight may be prepared through a process of additionally performing polymerization after reacting a 3-hydroxypropionic acid monomer or polymer at a temperature of 160 °C or higher.

The method for preparing poly(3-hydroxypropionate) composition according to the embodiment includes a step of preparing a high-temperature reacted 3-hydroxypropionic acid oligomer or polymer by reacting a 3-hydroxypropionic acid monomer or polymer at a temperature of 160 °C or higher.

The step of preparing the high-temperature reacted 3-hydroxypropionic acid oligomer or polymer by reacting the 3-hydroxypropionic acid monomer or polymer at a temperature of 160 °C or higher may be a step of preparing a high-temperature reacted 3-hydroxypropionic acid oligomer by polymerizing the 3-hydroxypropionic acid monomer at a temperature of 160 °C or higher.

By polymerizing the 3-hydroxypropionic acid at a high temperature of 160 °C or higher, the vinyl group content of the 3-hydroxypropionate oligomer may be improved. The end group of the 3-hydroxypropionate oligomer may include a hydroxyl group, a carboxyl group, a vinyl group, etc. Conventionally, vinyl groups generated as a side reaction in the process of polymerization of 3-hydroxypropionic acid were considered a cause for making it difficult to obtain a high molecular weight polymer, and there were attempts to reduce their content.

However, the present inventor completed the invention by confirming that when the terminal vinyl group of the 3-hydroxypropionate oligomer participates in an additional polymerization reaction, the molecular weight of the finally prepared polymer becomes larger and a branched polymer may be prepared. Specifically, in the process of polymerizing the 3-hydroxypropionate oligomer, an addition polymerization reaction of the terminal vinyl group of the 3-hydroxypropionate oligomer, for example, radical polymerization and/or ion polymerization, may be additionally performed, and due to this addition polymerization reaction of the vinyl group, a composition including branched structure poly(3-hydroxypropionate) with a large number-average molecular weight may be prepared.

That is, through the process of polymerizing 3-hydroxypropionic acid at a high temperature of 160 °C or higher, the content of terminal vinyl groups capable of subsequent addition polymerization reaction is increased, and by additionally polymerizing this oligomer, a composition including poly(3-hydroxypropionate) which is branched and has a large number-average molecular weight may be finally prepared.

For example, the 3-hydroxypropionate oligomer may have a terminal vinyl group content of 5 % or more and 40 % or less, for example, 6 % or more, 8 % or more, 10 % or more, 20 % or more, 25 % or more, or 30 % or more, and 39% or less, 38 % or less, 37 % or less, 36 % or less, 35 % or less, 34 % or less, 33 % or less, or 32 % or less.

In addition, since the vinyl group participates in the reaction in the process of polymerizing the 3-hydroxypropionate oligomer, the poly(3-hydroxypropionate) may have a terminal vinyl group content of 35 % or less, for example, 0 %, 0.01 % or more, 0.1 % or more, 0.5 % or more, 1 % or more, 3 % or more, or 5 % or more, and 30 % or less, 25 % or less, 20 % or less, 15 % or less, 10 % or less, 8 % or less, 7 % or less, or 6 % or less.

The terminal vinyl group content of the oligomer and/or polymer may be calculated as the ratio of vinyl groups to total end groups through $^1H$-NMR measurement using an NMR (Buker 500MHz NMR model instrument). Specifically, it may be calculated by the following mathematical formula 1 by dissolving the polymer in d-$CDCl_3$ at a concentration of 8 mg/ml for measurement.

[Mathematical Formula 1]

$$vinyl\ group(\%) = \frac{2a}{(2a+b)} \times 100$$

In the mathematical formula 1,

a is the area value of $^1H$ of C=C at 6.3 ppm, and
b is the area value of $^2H$ of HO-$CH_2$- at 3.8 ppm.

The area value of $^1H$ of C=C is the area value of one hydrogen among the hydrogens (H) of the double bond of the vinyl group, and the area value of $^2H$ of HO-$CH_2$-is the area value of two hydrogens substituted on the carbon connected to the hydroxyl group end.

In the step of polymerizing the 3-hydroxypropionic acid at a temperature of 160 °C or higher, the polymerization temperature may be 165 °C or higher and 230 °C or less, 170 °C or higher and 220 °C or less, 175 °C or higher and 210 °C or less, or 180 °C or higher and 200 °C or less. If the polymerization temperature is too low, the terminal vinyl group content of the 3-hydroxypropionate oligomer may not increase, resulting in a low number-average molecular weight of the finally prepared polymer, and if the heat treatment temperature is too high, it may be difficult for the polymerization of 3-hydroxypropionate to proceed.

In addition, the reaction at a temperature of 160 °C or higher may be carried out under non-catalytic conditions. That is, the polymerization of the 3-hydroxypropionic acid may be carried out under non-catalytic conditions. Since the polymerization of the 3-hydroxypropionic acid is carried out at a high temperature without using a catalyst, the terminal vinyl group content may be improved. If the polymerization is carried out in the presence of a catalyst, the polydispersity index may become very broad, making it difficult to control the molecular weight.

In addition, the method for preparing poly(3-hydroxypropionate) composition according to the embodiment may include a step of preparing a poly(3-hydroxypropionate) composition by polymerizing the high-temperature reacted 3-hydroxypropionic acid oligomer or polymer.

In addition, the reaction of polymerizing the high-temperature reacted 3-hydroxypropionic acid oligomer may be a melt polymerization reaction, and melt polymerization means that the reactants and products remain in a liquid state. In addition, as described above, the polymerization reaction may be accompanied by an addition reaction of vinyl groups.

The polymerization may be carried out at a pressure of 4 torr or less and a temperature of 70 °C or higher and 120 °C or less. For example, the temperature for polymerizing the high-temperature reacted 3-hydroxypropionic acid oligomer may be 75 °C or higher, 80 °C or higher, or 85 °C or higher, and 115 °C or less, 110 °C or less, 105 °C or less, or 100 °C or less. In addition, the pressure of the polymerization may be 0.01 torr or more, 0.1 torr or more, 0.5 torr or more, or 1.0 torr or more, and 3.5 torr or less, 3.0 torr or less, or 2.5 torr or less. The polymerization reaction time may be appropriately considered in consideration of the molecular weight, yield, etc. of the polymer to be produced, and is preferably carried out for 1 hour to 60 hours, 5 hours to 50 hours, 10 hours to 40 hours, or 15 hours to 30 hours.

In addition, the polymerization reaction may be carried out in the presence of a sulfonic acid-based catalyst. The sulfonic acid-based catalyst is not particularly limited as long as it is a catalyst containing one or more sulfonic groups, but may be, for example, p-toluenesulfonic acid, m-xylene-4-sulfonic acid, 2-mesitylenesulfonic acid, or p-xylene-2-sulfonic acid. The catalyst may be 0.01 mol% or more and 20 mol% or less with respect to poly(3-hydroxypropionic acid), and for example, it may be 0.05 mol% or more, 0.10 mol% or more, 0.20 mol% or more, 0.30 mol% or more, 0.40 mol% or more, 0.50 mol% or more, 0.70 mol% or more, 1.00 mol% or more, or 3.00 mol% or more, and may be used at 18 mol% or less, 15 mol% or less, 13 mol% or less, 10 mol% or less, 8 mol% or less, or 5 mol% or less.

In addition, during the polymerization reaction, the reaction can proceed without a separate coupling agent, crosslinking agent, or initiator other than the catalyst. Conventionally, the use of a crosslinking agent increased the molecular weight, but there were problems of toxicity or increased process costs. However, the method for preparing the poly(3-hydroxypropionate) composition does not use a crosslinking agent, a coupling agent, an initiator, etc., so the problems associated with their addition may be prevented.

In addition, the high-temperature reacted 3-hydroxypropionic acid oligomer may have a number-average molecular weight of 8,000 or less, 1,500 or more and 7,000 or less, 1,700 or more and 6,500 or less, 1,900 or more and 6,000 or less, or 2,000 or more and 55,000 or less.

In addition, the high-temperature reacted 3-hydroxypropionate oligomer may have a weight-average molecular weight of 20,000 or less, 1,000 or more and 15,000 or less, 1,500 or more and 13,000 or less, 2,000 or more and 10,000 or less, 2,500 or more and 9,000 or less, or 30,000 or more and 8,000 or less.

In addition, in the method for preparing poly(3-hydroxypropionate) composition according to the embodiment,

the step of preparing the high-temperature reacted 3-hydroxypropionic acid oligomer or polymer by reacting the 3-hydroxypropionic acid monomer or polymer at a temperature of 160 °C or higher may be a step of preparing a high-temperature reacted 3-hydroxypropionic acid polymer by heat-treating the 3-hydroxypropionic acid polymer at a temperature of 160 °C or higher.

At this time, before the step of preparing the high-temperature reacted 3-hydroxypropionic acid polymer by heat-treating the 3-hydroxypropionic acid polymer at a temperature of 160 °C or higher, a step of removing a catalyst included in the 3-hydroxypropionic acid polymer may be included.

The method for removing the catalyst included in the 3-hydroxypropionic acid polymer is not limited thereto, but for example, the catalyst may be removed by dissolving the 3-hydroxypropionic acid polymer in a solvent and then precipitating it. Specifically, after dissolving the 3-hydroxypropionic acid polymer in a solvent such as chloroform, 3-hydroxypropionic acid polymer crystals are formed using isopropanol (IPA), and the catalyst included in the 3-hydroxypropionic acid polymer may be removed through a solid-liquid separation process by precipitating these crystals. Thereafter, the 3-hydroxypropionic acid polymer from which the catalyst is removed may be recovered by drying the 3-hydroxypropionic acid polymer crystals from which the catalyst is removed.

In the step of preparing the high-temperature reacted 3-hydroxypropionic acid polymer by heat-treating the 3-hydroxypropionic acid polymer at a temperature of 160 °C or higher, the terminal vinyl group content of the 3-hydroxypropionic acid polymer may be improved by heat-treating the 3-hydroxypropionic acid polymer at a temperature of 160 °C or higher. The end groups of poly(3-hydroxypropionic acid) may include a hydroxyl group, a carboxyl group, a vinyl group, etc. Conventionally, vinyl groups generated as a side reaction in the process of polymerization of 3-hydroxypropionic acid into poly(3-hydroxypropionic acid) were considered a cause for making it difficult to obtain a high molecular weight polymer, and there were attempts to reduce their content.

However, the present inventor completed the invention by confirming that when the terminal vinyl group of the 3-hydroxypropionic acid polymer participates in a polymerization reaction, the molecular weight of the finally prepared polymer, particularly the size of the number-average molecular weight, becomes larger and a branched polymer may be prepared. Specifically, in the process of additionally polymerizing the high-temperature reacted 3-hydroxypropionic acid polymer, an addition polymerization reaction of the terminal vinyl group, for example, radical polymerization and/or ion polymerization, may be additionally performed, and due to this addition polymerization reaction of the vinyl group, a composition including branched poly(3-hydroxypropionate) with a large number-average molecular weight may be prepared.

That is, through the process of heat-treating the 3-hydroxypropionic acid polymer at a high temperature of 160 °C or higher, the content of terminal vinyl groups capable of subsequent addition polymerization reaction is increased, and by additionally polymerizing this high-temperature reacted 3-hydroxypropionic acid polymer, a composition including branched poly(3-hydroxypropionate) with a large number-average molecular weight may be finally prepared.

For example, the high-temperature reacted 3-hydroxypropionic acid polymer may have a terminal vinyl group content of 5 % or more and 40 % or less, for example, 6 % or more, 8 % or more, 10 % or more, 20 % or more, 25 % or more, or 30 % or more, and 39% or less, 38 % or less, 37 % or less, 36 % or less, 35 % or less, 34 % or less, 33 % or less, or 32 % or less.

In addition, since the vinyl group participates in the reaction in the subsequent polymerization process, the poly(3-hydroxypropionate) may have a terminal vinyl group content of 35 % or less, for example, 0 %, 0.01 % or more, 0.1 % or more, 0.5 % or more, 1 % or more, 3 % or more, or 5 % or more, and 30 % or less, 25 % or less, 20 % or less, 15 % or less, 10 % or less, 8 % or less, 7 % or less, or 6 % or less.

In the step of heat-treating the 3-hydroxypropionic acid polymer at a temperature of 160 °C or higher, the heat treatment temperature may be 165 °C or higher and 230 °C or less, 170 °C or higher and 220 °C or less, 175 °C or higher and 210 °C or less, or 180 °C or higher and 200 °C or less. If the heat treatment temperature is too low, the terminal vinyl group content of the 3-hydroxypropionic acid polymer may not increase, resulting in a low number-average molecular weight of the finally prepared polymer, and if the heat treatment temperature is too high, thermal decomposition of the polymer may proceed, and a large amount of by-products may be generated.

In addition, the heat treatment may be carried out for 30 minutes or more and 12 hours or less, 1 hour or more and 10 hours or less, or 2 hours or more and 8 hours or less. If the heat treatment is carried out for too short a time, the terminal vinyl group content of the 3-hydroxypropionic acid polymer may not increase, resulting in a low number-average molecular weight of the finally prepared polymer, and if the heat treatment is carried out for too long, thermal decomposition of the polymer may proceed, and a large amount of by-products may be generated.

In addition, the heat treatment of the 3-hydroxypropionic acid polymer may be carried out under non-catalytic conditions. Since the heat treatment of the 3-hydroxypropionic acid polymer is carried out at a high temperature without using a catalyst, the terminal vinyl group content may be improved. If the heat treatment is carried out in the presence of a catalyst, the polydispersity index may become very broad, making it difficult to control the molecular weight.

In addition, as described above, by additionally performing a process of removing the catalyst before heat-treating the 3-hydroxypropionic acid polymer, problems due to the use of the catalyst may be prevented.

In addition, the method for preparing poly(3-hydroxypropionate) composition according to the embodiment may include a step of preparing a poly(3-hydroxypropionate) composition by polymerizing the high-temperature reacted 3-hydroxypropionic acid polymer.

The polymerization reaction may be a melt polymerization reaction, and melt polymerization means that the reactants and products remain in a liquid state. In addition, as described above, the polymerization reaction may be accompanied by an addition reaction of vinyl groups. The polymerization may be carried out at a pressure of 4 torr or less and a temperature of 70 °C or higher and 120 °C or less. For example, the polymerization temperature may be 75 °C or higher, 78 °C or higher, 80 °C or higher, or 85 °C or higher, and 115 °C or less, 110 °C or less, 105 °C or less, or 100 °C or less. In addition, the pressure of the polymerization may be 0.01 torr or more, 0.1 torr or more, 0.5 torr or more, or 1.0 torr or more, and 3.5 torr or less, 3.0 torr or less, or 2.5 torr or less. The polymerization reaction time may be appropriately considered in consideration of the molecular weight, yield, etc. of the polymer to be produced, and is preferably carried out for 1 hour to 60 hours, 5 hours to 50 hours, 10 hours to 40 hours, or 15 hours to 30 hours.

In addition, the polymerization reaction may be carried out in the presence of a sulfonic acid-based catalyst. The sulfonic acid-based catalyst is not particularly limited as long as it is a catalyst containing one or more sulfonic groups, but may be, for example, p-toluenesulfonic acid, m-xylene-4-sulfonic acid, 2-mesitylenesulfonic acid, or p-xylene-2-sulfonic acid. The catalyst may be 0.01 mol% or more and 20 mol% or less with respect to poly(3-hydroxypropionic acid), and for example, it may be 0.05 mol% or more, 0.10 mol% or more, 0.20 mol% or more, 0.30 mol% or more, 0.40 mol% or more, 0.50 mol% or more, 0.70 mol% or more, 1.00 mol% or more, or 3.00 mol% or more, and may be used at 18 mol% or less, 15 mol% or less, 13 mol% or less, 10 mol% or less, 8 mol% or less, or 5 mol% or less.

In addition, during the polymerization reaction, the reaction can proceed without a separate coupling agent, crosslinking agent, or initiator other than the catalyst. Conventionally, the use of a crosslinking agent increased the molecular weight, but there were problems of toxicity or increased process costs. However, the method for preparing the poly(3-hydroxypropionate) composition does not use a crosslinking agent, a coupling agent, an initiator, etc., so the problems associated with their addition may be prevented.

The 3-hydroxypropionic acid polymer may have a number-average molecular weight of 20,000 or less, 2,000 or more and 18,000 or less, 4,000 or more and 16,000 or less, 6,000 or more and 14,000 or less, or 8,000 or more and 12,000 or less.

In addition, the 3-hydroxypropionic acid polymer may have a weight-average molecular weight of 80,000 or less, 10,000 or more and 70,000 or less, 12,000 or more and 60,000 or less, 14,000 or more and 50,000 or less, 16,000 or more and 40,000 or less, or 18,000 or more and 30,000 or less.

In addition, the number-average molecular weight of the poly(3-hydroxypropionate) composition may be 1.5 times or more the number-average molecular weight of the 3-hydroxypropionic acid polymer, for example, 2.0 times or more, 3.0 times or more, 4.0 times or more, 5.0 times or more, or 6.0 times or more, and 50 times or less, 40 times or less, 30 times or less, 25 times or less, or 20 times or less.

The poly(3-hydroxypropionate) composition may include a branched structure poly(3-hydroxypropionate); or a mixture of a branched structure poly(3-hydroxypropionate) and a linear structure poly(3-hydroxypropionate), so the molecular weight of the composition may be the molecular weight of the branched structure poly(3-hydroxypropionate) or the molecular weight measured for the mixture.

Meanwhile, the method for preparing the 3-hydroxypropionic acid polymer may be one prepared by a general polymerization process, but for example, it may be prepared by a step of preparing an oligomer by polymerizing 3-hydroxypropionic acid (step 1) and a step of preparing a 3-hydroxypropionic acid polymer by polymerizing the oligomer (step 2).

The polymerization reaction of step 1 may be a melt polymerization reaction, and may be carried out at a temperature of 50 °C or higher and 150 °C or less and a pressure of 1 torr or more and 200 torr or less. The reaction time of step 1 may be appropriately considered in consideration of the molecular weight, yield, etc. of the oligomer to be produced, and is preferably carried out for 1 hour to 10 hours, 1.5 hours to 8 hours, or 2 hours to 5 hours.

In addition, the polymerization reaction may be carried out in the presence of a sulfonic acid-based catalyst. The sulfonic acid-based catalyst is not particularly limited as long as it is a catalyst containing one or more sulfonic groups, but may be, for example, p-toluenesulfonic acid, m-xylene-4-sulfonic acid, 2-mesitylenesulfonic acid, or p-xylene-2-sulfonic acid. The catalyst may be used in an amount of 0.1 to 0.5 mol% with respect to 3-hydroxypropionic acid.

The polymerization reaction of step 2 may also be a melt polymerization reaction, and may be carried out at a temperature of 70 °C or higher and 150 °C or less. The reaction temperature of step 2 may be 75 °C or higher, 80 °C or higher, 85 °C or higher, 90 °C or higher, or 95 °C or higher, and 140 °C or less, 130 °C or less, 120 °C or less, or 110 °C or less. The reaction time of step 2 may be appropriately considered in consideration of the molecular weight, yield, etc. of the polymer to be produced, and is preferably carried out for 1 hour to 60 hours, 5 hours to 50 hours, 10 hours to 40 hours, or 15 hours to 30 hours.

Meanwhile, since step 2 is performed subsequently to step 1, the catalyst added in step 1 can also participate in the reaction in step 2. In addition, step 1 and step 2 may be carried out continuously.

The method for preparing poly(3-hydroxypropionate) composition according to the embodiment may include a step of crystallizing the poly(3-hydroxypropionate) composition, after the step of preparing the poly(3-hydroxypropionate) composition by polymerizing the high-temperature reacted 3-hydroxypropionic acid oligomer or polymer.

Through the process of crystallizing the poly(3-hydroxypropionate) composition and performing solid-liquid separation by precipitating these crystals, the catalyst, by-products, etc. included in the poly(3-hydroxypropionate) composition in addition to the branched and/or linear structure poly(3-hydroxypropionate) are removed and dried, whereby high-purity poly(3-hydroxypropionate) from which catalyst and moisture are removed may be prepared.

Meanwhile, the slope of the Mark-Houwink-Sakurada equation, weight-average molecular weight, etc. for the poly(3-hydroxypropionate) described later may be for the poly(3-hydroxypropionate) composition crystals recovered after the crystallization step.

According to another embodiment of the invention, there is provided a poly(3-hydroxypropionate) composition including a mixture including a linear structure poly(3-hydroxypropionate) and a branched structure poly(3-hydroxypropionate),

and a slope of the Mark-Houwink-Sakurada equation ($\alpha$) represented by the following mathematical formula 1 for the mixture is 0.10 or more and 0.45 or less.

[Mathematical Formula 1]

$$\log[\eta] = \alpha \log M + \log K$$

In the mathematical formula 1,

[$\eta$] is the intrinsic viscosity (dl/g) of the mixture,
M is the absolute molecular weight (Absolute MW) of the mixture, and
K is a constant.

The present inventors have completed the invention by confirming that in the case of a composition including two types of poly(3-hydroxypropionate) having different structures, linear and/or branched, and having a slope of the Mark-Houwink-Sakurada equation ($\alpha$) of 0.10 or more and 0.45 or less, both the number-average molecular weight and the weight-average molecular weight are high, while the glass transition temperature is higher and the melting temperature is lower or similar compared to conventional poly(3-hydroxypropionate).

In addition, the slope of the Mark-Houwink-Sakurada equation ($\alpha$) represented by the mathematical formula 1 for the mixture may be 0.10 or more and 0.45 or less, 0.13 or more and 0.40 or less, 0.15 or more and 0.35 or less, 0.17 or more and 0.30 or less, 0.18 or more and 0.29 or less, or 0.19 or more and 0.28 or less.

If the slope of the Mark-Houwink-Sakurada equation ($\alpha$) for the mixture is too small, the melting temperature may be too low, and if the slope ($\alpha$) is too large, the poly(3-hydroxypropionate) composition may contain almost no branched structure poly(3-hydroxypropionic acid), resulting in a low glass transition temperature or the inability to obtain a high molecular weight.

The slope of the Mark-Houwink-Sakurada equation ($\alpha$) means the slope value in a log-log graph with the log of the measured absolute molecular weight on the horizontal axis and the log of the measured intrinsic viscosity on the vertical axis, after measuring the intrinsic viscosity and absolute molecular weight of the mixture through GPC/MALS (Gel Permeation Chromatography/Multi-Angle Light Scattering). As the slope is closer to 1, the polymer has a linear structure, and if the slope is 0.10 or more and 0.45 or less, it may include a branched polymer, and as the slope value is closer to 0, the degree of branching may increase.

At this time, the mobile phase of GPC/MALS may be chloroform, and the measurement temperature may be 40 °C.

The mixture included in the poly(3-hydroxypropionate) composition according to the other embodiment may have a bimodal molecular weight distribution upon GPC/MALS measurement. In addition, the weight-average molecular weight, etc. may be measured for a mixture having a bimodal molecular weight distribution by GPC/MALS.

For example, the weight-average molecular weight for the mixture may be 30,000 or more and 200,000 or less, 40,000 or more and 150,000 or less, 50,000 or more and 100,000 or less, 60,000 or more and 90,000 or less, or 65,000 or more and 850,000 or less.

In addition, the number-average molecular weight for the mixture may be 8,000 or more and 100,000 or less, 9,000 or more and 90,000 or less, 10,000 or more and 80,000 or less, 11,000 or more and 70,000 or less, or 12,000 or more and 60,000 or less.

In addition, the polydispersity index (PDI) for the mixture may be 2.5 or more and 10.0 or less, 3.0 or more and 9.0 or less, 4.0 or more and 8.0 or less, or 5.0 or more and 7.0 or less.

The poly(3-hydroxypropionate) composition having a bimodal molecular weight distribution may include a first unimodal poly(3-hydroxypropionic acid) and a second unimodal poly(3-hydroxypropionic acid), and the first unimodal poly(3-hydroxypropionic acid) may have a number-average molecular weight of 25,000 or less, 2,000 or more and 18,000 or less, 4,000 or more and 16,000 or less, 5,000 or more and 14,000 or less, or 5,500 or more and 12,000 or less. In addition, the first unimodal poly(3-hydroxypropionic acid) may have a weight-average molecular weight of 40,000 or less, 8,000 or more and 30,000 or less, 9,000 or more and 25,000 or less, 10,000 or more and 20,000 or less, 11,000 or more and 19,000 or less, or 12,000 or more and 18,000 or less. In addition, the first unimodal poly(3-hydroxypropionic acid) may have a polydispersity index (PDI) of 2.5 or less, 1.1 or more and 2.4 or less, 1.2 or more and 2.3 or less, or 1.3 or more and 2.2 or less.

In addition, the second unimodal poly(3-hydroxypropionic acid) may have a number-average molecular weight of 30,000 or more, 40,000 or more and 200,000 or less, 50,000 or more and 180,000 or less, 55,000 or more and 170,000 or less, 60,000 or more and 160,000 or less, 63,000 or more and 150,000 or less, 65,000 or more and 140,000 or less, or 66,000 or more and 130,000 or less. In addition, the second unimodal poly(3-hydroxypropionic acid) may have a weight-average molecular weight of 50,000 or more, 70,000 or more and 900,000 or less, 90,000 or more and 850,000 or less, 100,000 or more and 800,000 or less, 110,000 or more and 700,000 or less, 120,000 or more and 600,000 or less, 130,000 or more and 500,000 or less, or 140,000 or more and 400,000 or less. In addition, the second unimodal poly(3-hydroxypropionic acid) may have a polydispersity index (PDI) of 1.0 or more and 3.5 or less, 1.1 or more and 3.3 or less, 1.2 or more and 3.1 or less, 1.3 or more and 3.0 or less, 1.4 or more and 2.9 or less, 1.5 or more and 2.8 or less, or 1.6 or more and 2.7 or less.

The mixture having a bimodal molecular weight distribution in the poly(3-hydroxypropionate) composition according to the embodiment may be deconvoluted into a linear structure poly(3-hydroxypropionate) and a branched structure poly(3-hydroxypropionate). After deconvolution, the molecular weights, etc. of the respective linear structure poly(3-hydroxypropionate) and branched structure poly(3-hydroxypropionate) may be measured.

For example, the linear structure poly(3-hydroxypropionate) may have a number-average molecular weight of 25,000 or less, 2,000 or more and 18,000 or less, 4,000 or more and 16,000 or less, 5,000 or more and 14,000 or less, or 5,500 or more and 12,000 or less.

In addition, the linear structure poly(3-hydroxypropionate) may have a weight-average molecular weight of 40,000 or less, 8,000 or more and 30,000 or less, 9,000 or more and 25,000 or less, 10,000 or more and 20,000 or less, 11,000 or more and 19,000 or less, or 12,000 or more and 18,000 or less.

In addition, the linear structure poly(3-hydroxypropionate) may have a polydispersity index (PDI) of 2.5 or less, 1.1 or more and 2.4 or less, 1.2 or more and 2.3 or less, or 1.3 or more and 2.2 or less.

In addition, the branched structure poly(3-hydroxypropionate) may have a number-average molecular weight of 30,000 or more, 40,000 or more and 200,000 or less, 50,000 or more and 180,000 or less, 55,000 or more and 170,000 or less, 60,000 or more and 160,000 or less, 63,000 or more and 150,000 or less, 65,000 or more and 140,000 or less, or 66,000 or more and 130,000 or less.

In addition, the branched structure poly(3-hydroxypropionate) may have a weight-average molecular weight of 50,000 or more, 70,000 or more and 900,000 or less, 90,000 or more and 850,000 or less, 100,000 or more and 800,000 or less, 110,000 or more and 700,000 or less, 120,000 or more and 600,000 or less, 130,000 or more and 500,000 or less, or 140,000 or more and 400,000 or less.

In addition, the branched structure poly(3-hydroxypropionate) may have a polydispersity index (PDI) of 1.0 or more and 3.5 or less, 1.1 or more and 3.3 or less, 1.2 or more and 3.1 or less, 1.3 or more and 3.0 or less, 1.4 or more and 2.9 or less, or less, 1.5 or more and 2.8 or less, or 1.6 or more and 2.7 or less.

The branched structure is not limited thereto, but may be a star type structure, a comb type structure, or the like.

For example, the branched structure poly(3-hydroxypropionate) may include a repeating unit represented by the following chemical formula 1.

[Chemical Formula 1]

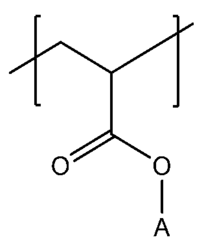

In the chemical formula 1,

A is a substituent represented by the following chemical formula 2,

[Chemical Formula 2]

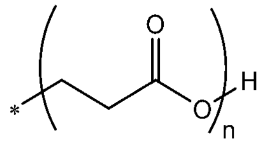

In the chemical formula 2,
* is the part connected to A, and
n is an integer from 10 to 700.

Meanwhile, in the chemical formula 2, the n may be 10 or more, 15 or more, 20 or more, 30 or more, 40 or more, 50 or more, 60 or more, 70 or more, 80 or more, 90 or more, or 100 or more, and 700 or less, 650 or less, 600 or less, 550 or less, 500 or less, 450 or less, or 400 or less.

The repeating unit represented by the chemical formula 1 may be included with a number of repetitions of 2 or more and 800 or less, for example, it may be included with a number of repetitions of 3 or more, 10 or more, 20 or more, 30 or more, 40 or more, or 50 or more, or 30 or more, or a number of repetitions of 750 or less, 700 or less, 650 or less, 600 or less, 550 or less, or 500 or less.

In addition, the n of chemical formula 2 included in each repeating unit may be different or the same.

The branched structure poly(3-hydroxypropionate) is not limited thereto, but may be represented by the following chemical formula 3.

[Chemical Formula 3]

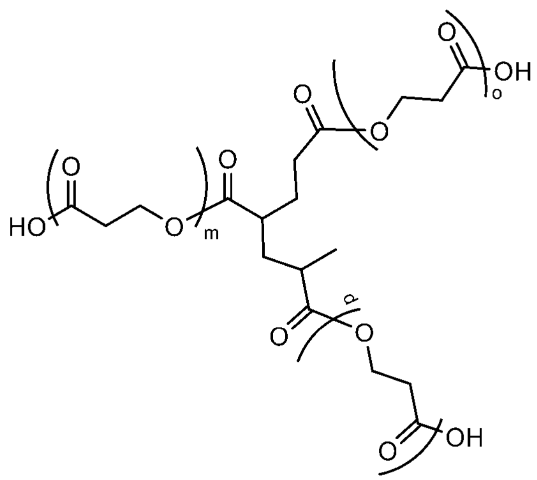

In the chemical formula 3,
m, o, and p may each independently be an integer from 10 to 700.

For example, m, o, and p may each independently be 10 or more, 15 or more, 20 or more, 30 or more, 40 or more, 50 or more, 60 or more, 70 or more, 80 or more, 90 or more, or 100 or more, and 700 or less, 650 or less, 600 or less, 550 or less, 500 or less, 450 or less, or 400 or less, and m, o, and p may be the same or different. When m, o, and p are the same, it may be a symmetric structure polymer, and when m, o, and p are different, it may be an asymmetric structure polymer.

In addition, in the poly(3-hydroxypropionate) composition according to the other embodiment, the weight ratio of the linear structure poly(3-hydroxypropionate) and the branched structure poly(3-hydroxypropionate) may be from 1:9 to 9:1. If an excessively large amount of the linear structure poly(3-hydroxypropionate) is included compared to the branched structure poly(3-hydroxypropionate), the weight-average molecular weight and number-average molecular weight may decrease.

In addition, the branched structure poly(3-hydroxypropionate) and the linear structure poly(3-hydroxypropionate) may be reacted in the mixture. The reaction may be formed through Proton transfer polymerization, oxa-Michael addition, or radical reaction, etc.

## ADVANTAGEOUS EFFECTS

As described above, a composition including poly(3-hydroxypropionate) that has biodegradability, has both high number-average molecular weight and weight-average molecular weight, and has a very narrow PDI value, and a method for preparing the same may be provided.

## BRIEF DESCRIPTION OF THE DRAWINGS

FIG. 1 is a Mark-Houwink-Sakurada graph calculated using GPC/MALS for the poly(3-hydroxypropionate) of Examples 5,10 and Comparative Example 3.

## DETAILED DESCRIPTION OF THE EMBODIMENTS

Hereinafter, embodiments of the present invention will be described in more detail in the following examples. However, the following examples are merely to illustrate the embodiments of the present invention, and the content of the present invention is not limited by the following examples.

### Preparation Example 1

50 g of a 3-hydroxypropionic acid aqueous solution (purity 50 %) and 0.15 mg of a p-toluenesulfonic acid monohydrate (p-TSA) catalyst were added to a 3-neck glass reactor, distillation concentrated at a temperature of 80 to 90 °C and a vacuum condition of 80 torr, and further subjected to a polymerization reaction at the same temperature and a pressure of 2 torr for 18 hours to prepare a 3-hydroxypropionic acid polymer (number-average molecular weight: 8,878, weight-average molecular weight: 23,718).

### Example 1

80 g of a 3-hydroxypropionic acid aqueous solution (purity 74.3 %) was added to a 3-neck glass reactor, and the temperature of the oil bath was raised to carry out a polymerization reaction at a temperature of 180 °C under nitrogen reflux for 4 hours while removing water, to prepare a 3-hydroxypropionate oligomer (number-average molecular weight: 1,919, weight-average molecular weight: 2,936).

After the reaction was completed, it was cooled to a temperature of 100 °C, 251 mg of a p-toluenesulfonic acid monohydrate (p-TSA) catalyst was added to the oil bath, and a polymerization reaction was carried out at a temperature of 80 °C and a pressure of 2 torr for 21 hours to prepare a poly(3-hydroxypropionate) composition. Thereafter, it was dissolved in Chloroform, precipitated using isopropanol (IPA) for crystallization, and dried to recover a crystallized poly(3-hydroxypropionate) composition.

### Example 2

80 g of a 3-hydroxypropionic acid aqueous solution (purity 74.3 %) was added to a 3-neck glass reactor, and the temperature of the oil bath was raised to carry out a polymerization reaction at a temperature of 180 °C under nitrogen reflux for 5.5 hours while removing water, to prepare a 3-hydroxypropionate oligomer (number-average molecular weight: 2,410, weight-average molecular weight: 4,036).

After the reaction was completed, it was cooled to a temperature of 100 °C, 251 mg of a p-toluenesulfonic acid monohydrate (p-TSA) catalyst was added to the oil bath, and a polymerization reaction was carried out at a temperature of 85 °C and a pressure of 3 torr for 21 hours to prepare a poly(3-hydroxypropionate) composition. Thereafter, it was dissolved in Chloroform, precipitated using isopropanol (IPA) for crystallization, and dried to recover a crystallized poly(3-hydroxypropionate) composition.

### Example 3

80 g of a 3-hydroxypropionic acid aqueous solution (purity 74.3 %) was added to a 3-neck glass reactor, and the temperature of the oil bath was raised to carry out a polymerization reaction at a temperature of 180 °C under nitrogen reflux for 8 hours while removing water, to prepare a 3-hydroxypropionate oligomer (number-average molecular weight: 1,919, weight-average molecular weight: 2,936).

After the reaction was completed, it was cooled to a temperature of 100 °C, 251 mg of a p-toluenesulfonic acid monohydrate (p-TSA) catalyst was added to the oil bath, and a polymerization reaction was carried out at a temperature of 90 °C and a pressure of 2 torr for 19 hours to prepare a poly(3-hydroxypropionate) composition. Thereafter, it was

dissolved in Chloroform, precipitated using isopropanol (IPA) for crystallization, and dried to recover a crystallized poly(3-hydroxypropionate) composition.

### Example 4

80 g of a 3-hydroxypropionic acid aqueous solution (purity 74.3 %) was added to a 3-neck glass reactor, and the temperature of the oil bath was raised to carry out a polymerization reaction at a temperature of 180 °C under nitrogen reflux for 2 hours while removing water, and then raised to 200 °C for 1 hour, to prepare a 3-hydroxypropionate oligomer (number-average molecular weight: 2,035, weight-average molecular weight: 3,305).

After the reaction was completed, it was cooled to a temperature of 100 °C, 251 mg of a p-toluenesulfonic acid monohydrate (p-TSA) catalyst was added to the oil bath, and a polymerization reaction was carried out at a temperature of 90 °C and a pressure of 2 torr for 23 hours to prepare a poly(3-hydroxypropionate) composition. Thereafter, it was dissolved in Chloroform, precipitated using isopropanol (IPA) for crystallization, and dried to recover a crystallized poly(3-hydroxypropionate) composition.

### Example 5

100 g of 3-hydroxypropionic acid (68 % aqueous solution) was added to an oil bath, and a polymerization reaction was carried out at a temperature of 180 °C under nitrogen reflux for 4 hours while removing water, to prepare a 3-hydroxypropionate oligomer (number-average molecular weight: 2,340, weight-average molecular weight: 4,056).

After the reaction was completed, it was cooled to a temperature of 100 °C, 300 mg of a p-toluenesulfonic acid (p-TSA) catalyst was added to the oil bath, and a polymerization reaction was carried out at a temperature of 85 °C and a pressure of 1 torr for 30 hours to prepare a poly(3-hydroxypropionate) composition. Thereafter, it was dissolved in Chloroform, precipitated using isopropanol (IPA) for crystallization, and dried to recover a crystallized poly(3-hydroxypropionate) composition.

### Example 6

The 3-hydroxypropionic acid polymer prepared in Preparation Example 1 was dissolved in Chloroform and then precipitated using isopropanol (IPA), followed by crystallization to remove the p-TSA catalyst.

20 g of the 3-hydroxypropionic acid polymer from which the catalyst was removed was added to an oil bath, and a heat treatment reaction was carried out at a temperature of 180 °C under nitrogen reflux for 5 hours.

After the heat treatment reaction was completed, it was cooled to a temperature of 100 °C, 0.12 mg of a p-toluenesulfonic acid (p-TSA) catalyst was added to the oil bath, and a polymerization reaction was carried out at a temperature of 80 °C and a pressure of 1 torr for 17 hours. Thereafter, it was dissolved in Chloroform, precipitated using isopropanol (IPA) for crystallization, and dried to recover a poly(3-hydroxypropionate) composition.

### Example 7

The 3-hydroxypropionic acid polymer prepared in Preparation Example 1 was dissolved in Chloroform and then precipitated using isopropanol (IPA), followed by crystallization to remove the p-TSA catalyst.

20 g of the 3-hydroxypropionic acid polymer from which the catalyst was removed was added to an oil bath, and a heat treatment reaction was carried out at a temperature of 180 °C under nitrogen reflux for 4 hours.

After the heat treatment reaction was completed, it was cooled to a temperature of 100 °C, 0.12 mg of a p-toluenesulfonic acid (p-TSA) catalyst was added to the oil bath, and a polymerization reaction was carried out at a temperature of 80 °C and a pressure of 1 torr for 40 hours. Thereafter, it was dissolved in Chloroform, precipitated using isopropanol (IPA) for crystallization, and dried to recover a poly(3-hydroxypropionate) composition.

### Example 8

The 3-hydroxypropionic acid polymer prepared in Preparation Example 1 was dissolved in Chloroform and then precipitated using isopropanol (IPA), followed by crystallization to remove the p-TSA catalyst.

20 g of the 3-hydroxypropionic acid polymer from which the catalyst was removed was added to an oil bath, and a heat treatment reaction was carried out at a temperature of 180 °C under nitrogen reflux for 8 hours.

After the heat treatment reaction was completed, it was cooled to a temperature of 100 °C, 0.40 mg of a p-toluenesulfonic acid (p-TSA) catalyst was added to the oil bath, and a polymerization reaction was carried out at a temperature of 80 °C and a pressure of 2 torr for 30 hours. Thereafter, it was dissolved in Chloroform, precipitated using isopropanol (IPA) for crystallization, and dried to recover a poly(3-hydroxypropionate) composition.

**Example 9**

The 3-hydroxypropionic acid polymer prepared in Preparation Example 1 was dissolved in Chloroform and then precipitated using isopropanol (IPA), followed by crystallization to remove the p-TSA catalyst.
20 g of the 3-hydroxypropionic acid polymer from which the catalyst was removed was added to an oil bath, and a heat treatment reaction was carried out at a temperature of 180 °C under nitrogen reflux for 5 hours.
After the heat treatment reaction was completed, it was cooled to a temperature of 100 °C, 0.50 mg of a p-toluenesulfonic acid (p-TSA) catalyst was added to the oil bath, and a polymerization reaction was carried out at a temperature of 80 °C and a pressure of 2 torr for 40 hours. Thereafter, it was dissolved in Chloroform, precipitated using isopropanol (IPA) for crystallization, and dried to recover a poly(3-hydroxypropionate) composition.

**Example 10**

200 g of a 3-hydroxypropionic acid aqueous solution (purity 50 %) and 550 mg of a p-toluenesulfonic acid monohydrate (p-TSA) catalyst were added to a 3-neck glass reactor, concentrated at a temperature of 70 °C and a pressure of 65 torr for 3 hours, and then a polymerization reaction was carried out at a temperature of 85 °C and a pressure of 1 torr for 25 hours to prepare a 3-hydroxypropionic acid polymer.
The 3-hydroxypropionic acid polymer was dissolved in Chloroform and then precipitated using isopropanol (IPA), followed by crystallization to remove the p-TSA catalyst.
50 g of the 3-hydroxypropionic acid polymer from which the catalyst was removed was added to an oil bath, and a heat treatment reaction was carried out at a temperature of 180 °C under nitrogen reflux for 4 hours. After the heat treatment reaction was completed, it was cooled to a temperature of 100 °C, 300 mg of a p-toluenesulfonic acid (p-TSA) catalyst was added to the oil bath, and a polymerization reaction was carried out at a temperature of 85 °C and a pressure of 1 torr for 25 hours. Thereafter, it was dissolved in Chloroform, precipitated using isopropanol (IPA) for crystallization, and dried to recover a poly(3-hydroxypropionate) composition.

**Example 11**

30 g of 3-hydroxypropionic acid (60 % aqueous solution) was added to an oil bath, and a polymerization reaction was carried out at a temperature of 180 °C under nitrogen reflux for 4 hours while removing water, to prepare a 3-hydroxypropionate oligomer (number-average molecular weight: 2,050, weight-average molecular weight: 3,320).
After the reaction was completed, it was cooled to a temperature of 100 °C, 100 mg of a p-toluenesulfonic acid (p-TSA) catalyst was added to the oil bath, and a polymerization reaction was carried out at a temperature of 80 °C and a pressure of 4 torr for 17 hours to prepare a poly(3-hydroxypropionate) composition. Thereafter, it was dissolved in Chloroform, precipitated using isopropanol (IPA) for crystallization, and dried to recover a poly(3-hydroxypropionate) composition.

**Example 12**

100 g of 3-hydroxypropionic acid (60 % aqueous solution) was added to an oil bath, and a polymerization reaction was carried out at a temperature of 180 °C under nitrogen reflux for 4 hours while removing water, to prepare a 3-hydroxypropionate oligomer (number-average molecular weight: 1,740, weight-average molecular weight: 2,980).
After the reaction was completed, it was cooled to a temperature of 100 °C, 100 mg of a p-toluenesulfonic acid (p-TSA) catalyst was added to the oil bath, and a polymerization reaction was carried out at a temperature of 80 °C and a pressure of 4 torr for 20 hours to prepare a poly(3-hydroxypropionate) composition. Thereafter, it was dissolved in Chloroform, precipitated using isopropanol (IPA) for crystallization, and dried to recover a poly(3-hydroxypropionate) composition.

**Example 13**

100 g of 3-hydroxypropionic acid (68 % aqueous solution) was added to an oil bath, and a polymerization reaction was carried out at a temperature of 180 °C under nitrogen reflux for 8 hours while removing water, to prepare a 3-hydroxypropionate oligomer (number-average molecular weight: 2,540, weight-average molecular weight: 4,456).
After the reaction was completed, it was cooled to a temperature of 100 °C, 200 mg of a p-toluenesulfonic acid (p-TSA) catalyst was added to the oil bath, and a polymerization reaction was carried out at a temperature of 80 °C and a pressure of 2 torr for 21 hours to prepare a poly(3-hydroxypropionate) composition. Thereafter, it was dissolved in Chloroform, precipitated using isopropanol (IPA) for crystallization, and dried to recover a poly(3-hydroxypropionate) composition.

**Comparative Example 1**

80 g of a 3-hydroxypropionic acid aqueous solution (purity 74.3 %) was added to a 3-neck glass reactor, and the temperature of the oil bath was raised to polymerize at a temperature of 80 °C and 60 torr while removing water, to prepare a 3-hydroxypropionate oligomer (number-average molecular weight: 985, weight-average molecular weight: 1,034).
After the reaction was completed, 251 mg of a p-toluenesulfonic acid monohydrate (p-TSA) catalyst was added, and a polymerization reaction was carried out at a temperature of 85 °C and a pressure of 1.5 torr for 21 hours to prepare and purify poly(3-hydroxypropionate).

**Comparative Example 2**

80 g of a 3-hydroxypropionic acid aqueous solution (purity 74.3 %) was added to a 3-neck glass reactor, the temperature of the oil bath was raised to carry out a polymerization reaction at a temperature of 120 °C under nitrogen reflux for 3 hours while removing water, followed by additional polymerization at a temperature of 130 °C under nitrogen reflux for 1.5 hours, to prepare a 3-hydroxypropionate oligomer (number-average molecular weight: 2,365, weight-average molecular weight: 3,665).
After the reaction was completed, it was cooled to a temperature of 100 °C, 251 mg of a p-toluenesulfonic acid monohydrate (p-TSA) catalyst was added to the oil bath, and a polymerization reaction was carried out at a temperature of 85 °C and a pressure of 2 torr for 17 hours to prepare and purify poly(3-hydroxypropionate).

**Comparative Example 3**

80 g of 3-hydroxypropionic acid (75 % aqueous solution) was added to a 3-neck glass reactor, the temperature of the oil bath was raised to concentrate at a temperature of 86 °C and 70 torr, 25 mg of a p-toluenesulfonic acid monohydrate (p-TSA) catalyst was added, and polymerization was carried out at a temperature of 85 °C and a pressure of 0.8 torr for 15 hours. After the reaction was completed, it was dissolved in Chloroform, precipitated using isopropanol (IPA) for crystallization, and dried to recover poly(3-hydroxypropionate).

**Comparative Example 4**

The 3-hydroxypropionic acid polymer prepared in Preparation Example 1 was dissolved in Chloroform and then precipitated using isopropanol (IPA), followed by crystallization to remove the p-TSA catalyst.
20 g of the 3-hydroxypropionic acid polymer from which the catalyst was removed was added to an oil bath, and a heat treatment reaction was carried out at a temperature of 180 °C under nitrogen reflux for 5 hours, and the heat-treated 3-hydroxypropionic acid polymer was recovered.

**Comparative Example 5**

80 g of 3-hydroxypropionic acid (75 % aqueous solution) was added to a 3-neck glass reactor, the temperature of the oil bath was raised to concentrate at a temperature of 90 °C and 60 torr, 300 mg of a p-toluenesulfonic acid monohydrate (p-TSA) catalyst was added, and a polymerization reaction was carried out at a temperature of 90 °C and a pressure of 1 torr for 30 hours to prepare and purify poly(3-hydroxypropionate).

**Comparative Example 6**

80 g of 3-hydroxypropionic acid (75 % aqueous solution) was added to a 3-neck glass reactor, the temperature of the oil bath was raised to concentrate at a temperature of 80 °C and 60 torr, 251 mg of a p-toluenesulfonic acid monohydrate (p-TSA) catalyst was added, and polymerization was carried out at a temperature of 80 °C and a pressure of 1 torr for 20 hours. Thereafter, poly(3-hydroxypropionate) was prepared by further reacting at a temperature of 180 °C for 2 hours under nitrogen reflux.

**Experimental Example**

The properties of the polymers prepared in the above Examples and Comparative Examples were evaluated by the following methods, and the results are shown in Tables 1 and 2 below.

### 1. Molecular Weight Measurement

The weight-average molecular weight (Mw), number-average molecular weight (Mn), peak molecular weight (Mp), and polydispersity index (PDI) of the compositions of the above Examples and Comparative Examples were measured by Gel Permeation Chromatography (GPC: Waters Alliance e2695).

Meanwhile, for Examples 1 to 10, the molecular weight, etc. for the entire poly(3-hydroxypropionate) composition (mixture) having a bimodal molecular weight distribution were measured and shown in Table 1, and for Examples 11 to 13, the first poly(3-hydroxypropionic acid) of each unimodal peak and the second poly(3-hydroxypropionic acid) of the unimodal peak in the bimodal molecular weight distribution were measured and shown in Table 2 as the first P3HP and the second P3HP, respectively, and the weight ratio of the first P3HP and the second P3HP is shown in "Composition ratio (GPC area)".

- solvent: chloroform (eluent)
- Flow rate: 1.0 ml/min
- Column temperature: 35 °C
- Standard: Polystyrene

### 2. slope of the Mark-Houwink-Sakurada equation ($\alpha$)

The slope of the Mark-Houwink-Sakurada equation ($\alpha$) for the compositions of the Examples and Comparative Examples was measured using the following GPC/MALS, and the results are shown in 'MHS slope ($\alpha$)' in Table 1 below.

GPC: Alliance e2695 (Manufacturer: Waters),
MALS:

- RI : DAWN8 (Manufacturer: Wyatt)
- RI : Viscostar III (Manufacturer: Wyatt)
- RI : Optilab T-rEX (Manufacturer: Wyatt))

Specifically, the sample was prepared by dissolving it in chloroform (Stabilized with ETOH) at a concentration of 3 mg/mL, and the mobile phase was prepared by filtering 1000 mL of chloroform (Stabilized with ETOH) with a solvent clarification system.

In addition, the measurement conditions of GPC/MALS are as follows.

- Stationary phase: 2x Agilent PLgel MIXED-B and C, 7.5 x 300 mm, 5 $\mu$m
- Mobile phase: A; Chloroform (stabilized with ETOH) = 100 (v/v, %)
- Flow rate: 1.0 mL/min
- Stationary phase temperature: 40 °C
- Injection volume: 100 $\mu$l (0.45 $\mu$m filtered)
- Analysis time: 45 minutes
- System calibration: Polystyrene (Mp: 32700)
- Chloroform Refractive index: 1.45

For reference, the molecular weights such as the number-average molecular weight in Table 1 below are relative molecular weights calculated using a standard substance (polystyrene), whereas the molecular weights such as the number-average molecular weight in Table 2 below correspond to absolute molecular weights calculated from the molecular size measured using light scattering (MALS).

[Table 1]

| | number-average molecular weight (Mn) | weight-average molecular weight (Mw) | peak molecular weight (Mp) | polydispersity index (PDI) | MHS slope($\alpha$) |
|---|---|---|---|---|---|
| Example 1 | 36,251 | 192,583 | - | 5.31 | - |
| Example 2 | 25,142 | 84,858 | - | 3.34 | - |
| Example 3 | 42,844 | 245,001 | - | 5.71 | - |

(continued)

| | number-average molecular weight (Mn) | weight-average molecular weight (Mw) | peak molecular weight (Mp) | polydispersity index (PDI) | MHS slope(α) |
|---|---|---|---|---|---|
| Example 4 | 33,010 | 140,708 | - | 4.26 | - |
| Example 5 | 12,600 | 67,200 | 12,400 | 5.3 | 0.25 |
| Example 6 | 48,377 | 134,002 | - | 2.76 | - |
| Example 7 | 50,200 | 187,001 | - | 3.73 | - |
| Example 8 | 55,002 | 160,200 | - | 2.91 | - |
| Example 9 | 87,002 | 215,460 | - | 2.47 | - |
| Example 10 | 13,300 | 81,700 | 9,400 | 6.2 | 0.28 |
| Comparative Example 2 | 7,859 | 16,875 | - | 2.1 | |
| Comparative Example 3 | 6,300 | 11,300 | 11,500 | 1.8 | 0.70 |
| Comparative Example 4 | 6,089 | 13,311 | - | 2.19 | - |

[Table 2]

| | | Exampl e 11 | Exampl e 12 | Exampl e 13 | Comparativ e Example 1 | Comparativ e Example 5 | Comparativ e Example 6 |
|---|---|---|---|---|---|---|---|
| First P3HP | number-average molecular weight (Mn) | 7,921 | 5,621 | 9,890 | 14,300 | 15,210 | 4,297 |
| | weight-average molecular weight (Mw) | 13,603 | 12,301 | 17,650 | 24,510 | 26,501 | 8,577 |
| | polydispersit y index (PDI) | 1.70 | 2.19 | 1.78 | 1.71 | 1.74 | 1.99 |
| Secon d P3HP | number-average molecular weight (Mn) | 88,110 | 66,320 | 90,981 | - | - | - |
| | weight-average molecular weight (Mw) | 190,704 | 156,870 | 161,248 | - | - | - |
| | polydispersit y index (PDI) | 2.16 | 2.36 | 1.77 | - | - | - |
| Composition ratio (GPC area) | | 4 : 6 | 7 : 3 | 3 : 7 | - | | - |

Referring to Table 1, it was confirmed that Examples 1 to 5, where a polymer was prepared after preparing an oligomer by polymerizing 3-hydroxypropionic acid at a temperature of 160 °C or higher, and Examples 6 to 10, where polymerization was performed after heat treatment of a 3-hydroxypropionic acid polymer at a temperature of 160 °C or higher, had significantly higher number-average molecular weight and weight-average molecular weight compared to the Comparative Examples.

Meanwhile, it was confirmed that Examples 5 and 10 have larger molecular weights and smaller slope (α) values of the MHS equation compared to Comparative Example 3, indicating that Examples 5 and 10 have a structure with a higher degree of branching compared to Comparative Example 3.

In addition, referring to Table 2, it was confirmed that Examples 11 to 13 have a bimodal molecular weight distribution and the second P3HP has a high molecular weight, etc., whereas it was confirmed that Comparative Examples 1, 5, and 6 have a unimodal molecular weight distribution and a low molecular weight.

## Claims

**1.** A method for preparing poly(3-hydroxypropionate) composition, comprising:

a step of preparing a high-temperature reacted 3-hydroxypropionic acid oligomer or polymer by reacting a 3-hydroxypropionic acid monomer or polymer at a temperature of 160 °C or higher; and
a step of preparing a poly(3-hydroxypropionate) composition by polymerizing the high-temperature reacted 3-hydroxypropionic acid oligomer or polymer.

**2.** The method for preparing poly(3-hydroxypropionate) composition according to Claim 1,

wherein the step of preparing the high-temperature reacted 3-hydroxypropionic acid oligomer or polymer by reacting the 3-hydroxypropionic acid monomer or polymer at a temperature of 160 °C or higher is,
a step of preparing a high-temperature reacted 3-hydroxypropionic acid oligomer by polymerizing the 3-hydroxypropionic acid monomer at a temperature of 160 °C or higher.

**3.** The method for preparing poly(3-hydroxypropionate) composition according to Claim 1,

wherein the step of preparing the high-temperature reacted 3-hydroxypropionic acid oligomer or polymer by reacting the 3-hydroxypropionic acid monomer or polymer at a temperature of 160 °C or higher is,
a step of preparing a high-temperature reacted 3-hydroxypropionic acid polymer by heat-treating the 3-hydroxypropionic acid polymer at a temperature of 160 °C or higher.

**4.** The method for preparing poly(3-hydroxypropionate) composition according to Claim 3, further comprising,

before the step of preparing the high-temperature reacted 3-hydroxypropionic acid polymer by heat-treating the 3-hydroxypropionic acid polymer at a temperature of 160 °C or higher,
a step of removing a catalyst included in the 3-hydroxypropionic acid polymer.

**5.** The method for preparing poly(3-hydroxypropionate) composition according to Claim 1, further comprising,

after the step of preparing the poly(3-hydroxypropionate) composition by polymerizing the high-temperature reacted 3-hydroxypropionic acid oligomer or polymer,
a step of crystallizing the poly(3-hydroxypropionate) composition.

**6.** The method for preparing poly(3-hydroxypropionate) composition according to Claim 1,
wherein the reaction at a temperature of 160 °C or higher is carried out under non-catalytic conditions.

**7.** The method for preparing poly(3-hydroxypropionate) composition according to Claim 1,
wherein the polymerization is carried out at a pressure of 4 torr or less and a temperature of 70 °C or higher and 120 °C or less.

**8.** The method for preparing poly(3-hydroxypropionate) composition according to Claim 2,
wherein the high-temperature reacted 3-hydroxypropionic acid oligomer has a number-average molecular weight of 8,000 or less.

**9.** The method for preparing poly(3-hydroxypropionate) composition according to Claim 3,
wherein the 3-hydroxypropionic acid polymer has a number-average molecular weight of 20,000 or less.

**10.** The method for preparing poly(3-hydroxypropionate) composition according to Claim 3,
wherein the number-average molecular weight of the poly(3-hydroxypropionate) composition is 1.5 times or more the number-average molecular weight of the 3-hydroxypropionic acid polymer.

**11.** A poly(3-hydroxypropionate) composition, comprising

a mixture including a linear structure poly(3-hydroxypropionate) and a branched structure poly(3-hydroxypropionate),
wherein a slope of the Mark-Houwink-Sakurada equation ($\alpha$) represented by the following mathematical formula

1 for the mixture is 0.10 or more and 0.45 or less:

[Mathematical Formula 1]

$$\log[\eta] = \alpha \log M + \log K$$

in the mathematical formula 1,
[η] is an intrinsic viscosity (dl/g) of the mixture,
M is an absolute molecular weight (Absolute MW) of the mixture, and
K is a constant.

**12.** The poly(3-hydroxypropionate) composition according to Claim 11,

wherein a weight-average molecular weight for the mixture is 30,000 or more and 200,000 or less,
wherein a number-average molecular weight for the mixture is 8,000 or more and 100,000 or less, and
wherein a polydispersity index (PDI) for the mixture is 2.5 or more and 10.0 or less.

**13.** The poly(3-hydroxypropionate) composition according to Claim 11,

wherein the linear structure poly(3-hydroxypropionate) has a number-average molecular weight of 25,000 or less, and
wherein the linear structure poly(3-hydroxypropionate) has a weight-average molecular weight of 40,000 or less.

**14.** The poly(3-hydroxypropionate) composition according to Claim 11,

wherein the branched structure poly(3-hydroxypropionate) has a number-average molecular weight of 30,000 or more,
wherein the branched structure poly(3-hydroxypropionate) has a weight-average molecular weight of 50,000 or more, and
wherein the branched structure poly(3-hydroxypropionate) has a polydispersity index (PDI) of 1.0 or more and 3.5 or less.

**15.** The poly(3-hydroxypropionate) composition according to Claim 11,

wherein the branched structure poly(3-hydroxypropionate) comprises a repeating unit represented by the following chemical formula 1:

[Chemical Formula 1]

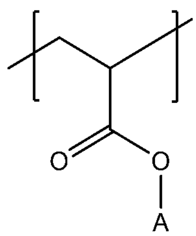

in the chemical formula 1,
A is a substituent represented by the following chemical formula 2,

[Chemical Formula 2]

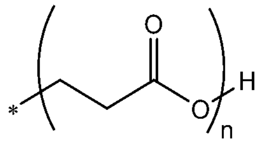

in the chemical formula 2,
* is a part connected to A, and
n is an integer from 10 to 700.

**16.** The poly(3-hydroxypropionate) composition according to Claim 11, wherein a weight ratio of the linear structure poly(3-hydroxypropionate) and the branched structure poly(3-hydroxypropionate) is from 1:9 to 9:1.

【FIG. 1】

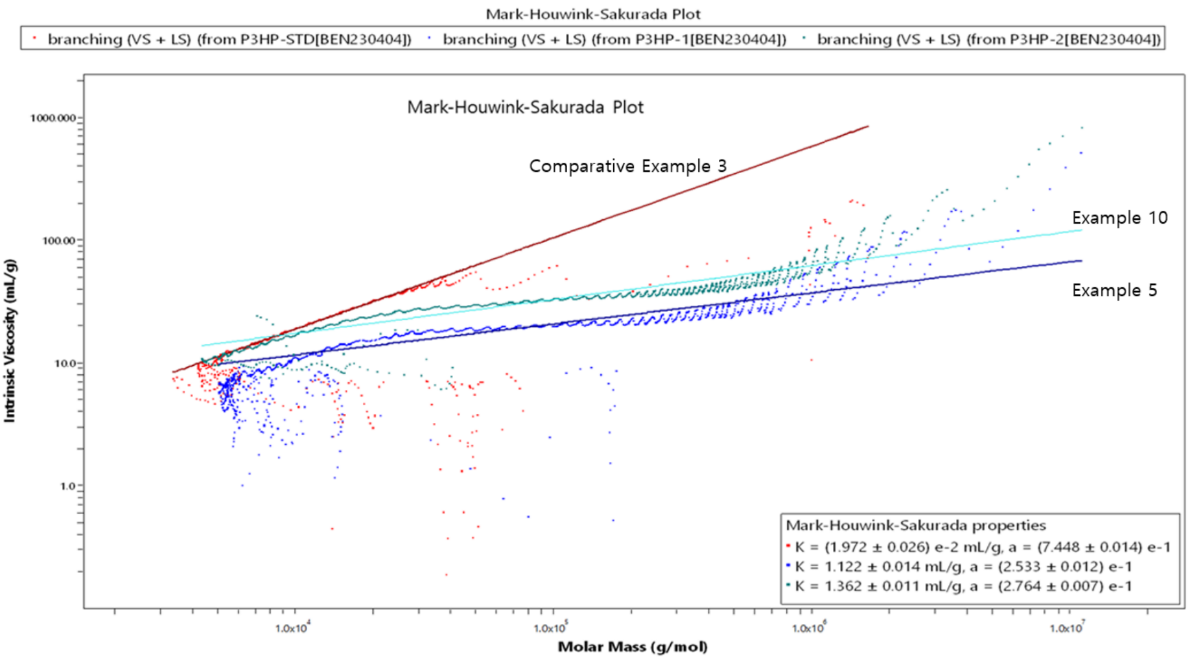
Mark-Houwink-Sakurada Plot
branching (VS + LS) (from P3HP-STD[BEN230404])
branching (VS + LS) (from P3HP-1[BEN230404])
branching (VS + LS) (from P3HP-2[BEN230404])
Mark-Houwink-Sakurada Plot
Comparative Example 3
Example 10
Example 5
Intrinsic Viscosity (mL/g)
1000.000
100.00
10.0
1.0
Molar Mass (g/mol)
1.0x10^4
1.0x10^5
1.0x10^6
1.0x10^7
Mark-Houwink-Sakurada properties
K = (1.972 ± 0.026) e-2 mL/g, a = (7.448 ± 0.014) e-1
K = 1.122 ± 0.014 mL/g, a = (2.533 ± 0.012) e-1
K = 1.362 ± 0.011 mL/g, a = (2.764 ± 0.007) e-1

**INTERNATIONAL SEARCH REPORT**

International application No.
**PCT/KR2025/002498**

**A. CLASSIFICATION OF SUBJECT MATTER**

**C08L 67/04**(2006.01)i; **C08L 33/14**(2006.01)i; **C08G 63/06**(2006.01)i; **C08G 63/78**(2006.01)i; **C08G 63/91**(2006.01)i; **C08F 120/28**(2006.01)i; **C08G 63/88**(2006.01)i

According to International Patent Classification (IPC) or to both national classification and IPC

**B. FIELDS SEARCHED**

Minimum documentation searched (classification system followed by classification symbols)

C08L 67/04(2006.01); C08G 63/06(2006.01); C08G 63/08(2006.01); C08G 63/60(2006.01); C08G 63/78(2006.01); C08G 63/82(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 3-하이드록시프로피온산(3-hydroxypropionic acid), 폴리(3-하이드록시프로피오네이트)(poly(3-hydroxypropionate), 선형(linear), 분지형(branched)

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2022-0039621 A (LG CHEM, LTD.) 29 March 2022 (2022-03-29)<br>See abstract; claim 1; example 1; and paragraph [0030]. | 1,2,5-8<br>3,4,9-16 |
| Y | GABIRONDO, E. et al. Poly(hydroxy acids) derived from the self-condensation of hydroxy acids: from polymerization to end-of-life options. Polymer Chemistry. 2020, vol. 11, pp. 4861-4874.<br>See figure 1; section polymerization of hydroxy acids; and table 1. | 1,2,5-8 |
| A | KR 10-2023-0022134 A (LG CHEM, LTD.) 14 February 2023 (2023-02-14)<br>See claims 1-12. | 1-16 |
| A | KR 10-2023-0020930 A (LG CHEM, LTD.) 13 February 2023 (2023-02-13)<br>See claims 1-15. | 1-16 |
| A | KR 10-2022-0151568 A (LG CHEM, LTD.) 15 November 2022 (2022-11-15)<br>See claims 1-16. | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 May 2025** | **26 May 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2025/002498**

| Patent document cited in search report | Publication date (day/month/year) | Patent family member(s) | Publication date (day/month/year) |
|---|---|---|---|
| KR 10-2022-0039621 A | 29 March 2022 | None | |
| KR 10-2023-0022134 A | 14 February 2023 | None | |
| KR 10-2023-0020930 A | 13 February 2023 | None | |
| KR 10-2022-0151568 A | 15 November 2022 | None | |

Form PCT/ISA/210 (patent family annex) (July 2022)